# FASCICULE DE BREVET EUROPEEN

(11) **EP 0 693 967 B1**
(45) Date de publication et mention de la délivrance du brevet: **01.03.2000**
(21) Numéro de dépôt: 94921680.8
(22) Date de dépôt: 04.07.1994
(51) Int. Cl.: B03B 9/06

(54) **PROCEDE ET INSTALLATION DE TRAITEMENT DE DECHETS MENAGERS**
VERFAHREN UND VORRICHTUNG ZUM AUFBEREITEN VON HAUSABFÄLLEN
METHOD AND PLANT FOR PROCESSING HOUSEHOLD REFUSE

(30) Priorité: 02.07.1993 FR 9308294
(43) Date de publication de la demande: 31.01.1996
(73) Titulaire: INTERNATIONAL ENVIRONNEMENT, Représentée par M. Michel Foulonneau, 31400 Toulouse (FR); Metzler, Jacques, F-31500 Toulouse (FR); Metzler, Olivier, F-31500 Toulouse (FR)
(72) Inventeur: METZLER, Jacques, F-31500 Toulouse (FR); METZLER, Olivier, F-31500 Toulouse (FR)
(86) Numéro de dépôt international: FR9400822
(87) Numéro de publication internationale: WO9501223

(56) Documents cités:
- EP-A- 0 170 301
- DE-A- 3 037 714
- DE-A- 3 732 008
- US-A- 3 952 113

## Description

La présente invention a pour objet un procédé de traitement de déchets ménagers et installation à cet effet en vue de leur recyclage et/ou de l'obtention d'un granulat.

La composition des ordures et déchets ménagers comprend de manière générale les produits suivants:
- matières organiques 25% : légumes, fruits, déchets de cuisine, etc...
- matières recyclables 50% : papiers, cartons, chiffons, cuirs, plastiques, verre, métaux ferreux et non ferreux, etc...
- matières inertes et boues 25% : pierres, faïence, déchets toxiques en quantités dispersées, etc...

On a cherché depuis longtemps à traiter ces ordures et déchets. Les solutions connues à ce jours sont les suivantes :
- mise en décharge avec tous les risques de pollution bien connus,
- incinération avec ou sans récupération d'énergie.

Le deuxième cas génère une importante pollution atmosphérique lorsque l'épuration des fumées n'est pas correcte.

Il nécessite des investissements lourds et d'exploitation coûteuse avec une importante consommation d'énergie.

Le premier cas, s'il a l'avantage théorique de la récupération de l'énergie, nécessite une infrastructure de distribution immédiate par exemple pour le chauffage urbain.

Cette solution n'est possible que dans les pays froids avec des ordures riches en matières combustibles.

Le troisième cas est celui de la production de compost à partir des déchets et ordures ménagères.

Cette technique est maintenant bien connue et donne des résultats intéressants.

Cependant, elle ne valorise qu'une partie des déchets contenus dans les ordures ménagères.

Cela suppose donc des opérations de manipulation et de triage dans des conditions particulièrement pénibles avec, tant pour le personnel assurant celui-ci que pour l'environnement, des nuisances importantes, notamment olfactives.

De plus, le compost obtenu est très humide, ce qui empêche son transport sur de longues distances et dans le cas d'utilisation en agriculture, ce qui ne donne pas, du fait de son humidité et des nuisances, satisfaction aux utilisateurs.

L'invention vise à réaliser un procédé de traitement des déchets et ordures ménagères qui d'une part présente le minimum de pénibilité et notamment de nuisances, odeurs et salissures, pour les personnels chargés du traitement et qui, d'autre part, après triage et valorisation des déchets, permet d'obtenir un produit à consistance sèche et de préférence granuleuse qui puisse être facilement stocké, transporté et épandu à titre d'engrais.

A cet effet, le procédé selon l'invention de traitement de déchets ménagers est du type comportant les phases successives suivantes :
**a)** réception, ouvreur de sacs et criblage sous arrosage,
**b)** séchage, puis triage et séparation des matières organiques putrescibles d'un côté, et de l'autre, triage et évacuation des matières premières secondaires recyclables.
**c)** pour les matières organiques putrescibles, après les phases **a)**, et **b)**, il est procédé à un broyage et à un séchage pour l'obtention d'un granulat,
   et caractérisé en ce que entre les phases **a), b),** on effectue les étapes supplémentaires de :
   **lavage et essorage par centrifugation.**

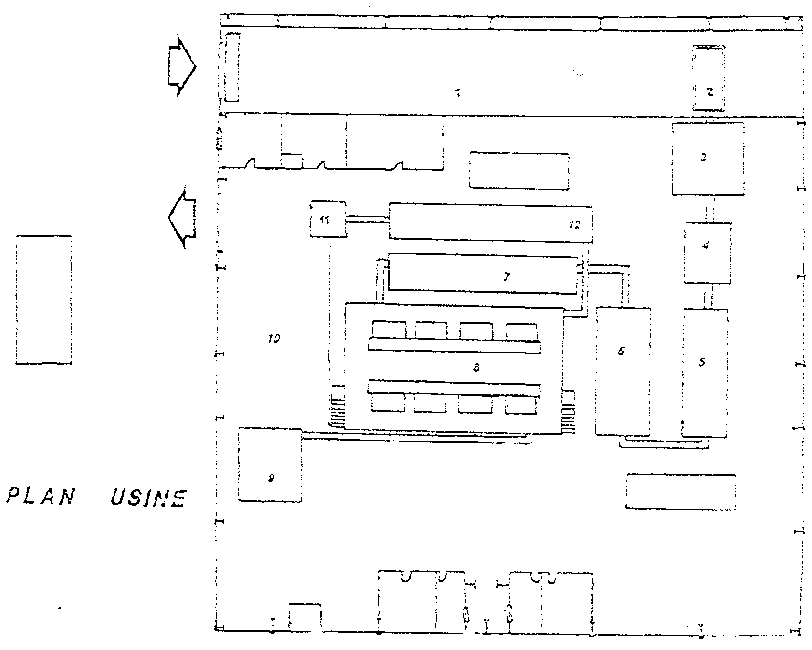

D'autres avantages et caractéristiques de l'invention apparaîtront à la lecture de la description ci-après d'une forme préférentielle de réalisation de l'invention donnée à titre d'exemple non limitatif et illustrée par le dessin ci-joint :
- la planche unique représente un schéma d'implantation d'une usine de traitement de déchets ménagers par mise en oeuvre du procédé selon l'invention.

Comme représenté au dessin annexé l'installation de mise en oeuvre du procédé selon l'invention comprend une cuve (**1)** de réception des déchets.

La cuve (**1)** est équipée d'une ventilation de type connu et d'un dispositif d'arrosage des déchets également connu.

La cuve (**1)** peut être dotée d'un système d'égouttage des produits.

Elle comprend un dispositif convoyeur connu du type vis sans fin ou tapis qui alimente une trémie (**2)**.

Le convoyage est régulé suivant les besoins.

La trémie (**2)** alimente un dispositif ouvreur de sacs (**3)**, avec arrosage intégré de préférence, qui ouvre les sacs et alimente un convoyeur à vis ou bande vers le poste de criblage (**4)**.

Le poste ouvreur de sacs ouvre les sacs grossièrement.

Le poste de crible (**4)** sépare les déchets de petite dimension et les poussières.

Ce poste est également doté d'un système d'arrosage.

Il alimente un poste (**5)** de lavage des déchets.

Le poste (**5)** de lavage est de préférence constitué par un tambour rotatif à axe horizontal ou vertical dans lequel le lavage s'effectue en utilisant de l'eau recyclée en permanence avec recyclage et récupération des graisses.

Les produits sont ensuite amenés par un transporteur (bande ou vis) vers le poste (**6)** de centrifugation qui expulse l'eau de lavage vers la station de traitement.

La centrifugation du poste (**6)** s'effectue au moyen d'une décanteuse rotative à fonctionnement continu.

Un transporteur à partir du poste (**6)** alimente le poste (**7)** de séchage. Ce séchage peut être soit effectué par un cyclône ou un séchoir équipé d'un transporteur interne qui effectue une déshumidification des produits, à trier ultérieurement, au moyen d'air asséché recyclé en continu par une station aéraulique.

Le système utilisé associe un couplage classique de pompe a chaleur et d'échangeurs de chaleur.

De préférence, la température de l'air de séchage est de 30 à 38°.

L'eau est récupérée par déshumidification de l'air.

En sortie du séchoir (**7)**, les produits sont amenés par des transporteurs dans une aire de triage manuel (**8)**.

Il est effectué, sur transporteur, une sélection en fonction de la nature des déchets comme énoncés au préambule. Des bandes transporteuses sélectives dans le poste de triage reçoivent les produits d'une même famille ou type. Les produits imputrescibles, les plastiques, les chiffons, le verre, le fer, les non ferreux et éventuellement d'autres produits, sont séparés et dirigés vers un poste de pressage (**9)** et/ou seront ensuite recyclés dans des stations adaptées pour certains produits, et pour les autres produits stockés à la station de stockage (**10)** pour être recyclés.

Les matières organiques putrescibles, résidus alimentaires et végétaux, après déshumidification sont amenés par un transporteur vers un poste de broyage (**11)**.

Le broyage est obtenu de toute manière adaptable par l'homme de l'art.

Les produits broyés obtenus sont dirigés vers un séchoir (**12)**.

Le granulat obtenu est de manière connue ensaché pour utilisation.

Les postes ouvreur de sacs (**3)**, criblage (**4)**, sont des postes humides en prélavage avec récupération de l'eau, ce qui facilite l'action des postes de lavage (**5)** et (**6)** de centrifugation.

Cette phase humide du procédé est une des caractéristiques importantes de l'invention qui permet de travailler sur des déchets débarrassés de la plupart des impuretés et nuisances, notamment olfactives, et hygiénisés par la fermentation accélérée de la matière organique putrescible.

La phase sèche du procédé poste de séchage (**7)**, triage (**8)** et pressage (**9)** pour les matières inorganiques et (**7)**, (**8)**, (**9)**, plus poste broyeur (**11)** et séchage (**12)** pour les matières organiques permettent à la fois un confort accru et des produits finis secs pour les matières premières secondaires et dans le cas des matières organiques putrescibles sous forme d'amendement particulièrement utilisable pour être épandu comme engrais.

Cette réalisation de l'invention permet d'utiliser les déchets organiques en agriculture sans que, comme dans les procédés de compostage traditionnels, l'humidité et les impuretés soient transmises au sol puisqu'elles ont été enlevées par l'arrosage et le séchage.

Il est à noter que les documents D1 EP-A-170301, D2 DE-A-3037714 et Brevet américain US-A-3.952.113 font apparaître que l'état correspondant de la technique permet de dire et d'affirmer que l'invention est nouvelle.

En effet, l'état de la technique définie dans les documents D1 EP-A-170301 et D2 DE-A-3037714 fait apparaître que le traitement des déchets ménagers est réalisé à l'état brut, **sans lavage**. Cette méthode n'a rien de commun avec la demande.

Dans le Brevet américain US-A-3.952.113 on utilise de l'eau mais à une fin différente. Ce lavage est tout à fait différent de l'opération mentionnée dans la demande car il sert à trier les produits et à séparer ensuite les élements restants par sédimentation.

Le document D3 A-3732008 porte sur une méthode de traitement et de purification de l'eau qui n'a rien à voir avec le traitement de déchets ménagers.

Ces éléments font bien apparaître que l'état correspondant de la technique permet d'affirmer que l'invention est nouvelle pour le traitement **par le lavage** des **déchets ménagers,** la **centrigugation** et le **séchage**.

Cette nouveauté est un plus par rapport à l'état de la technique, et l'application industrielle de celle activité inventive de traitement des déchets ménagers par le lavage, la centrifugation et le séchage des matières premières secondaires permet leur utilisation directe dans l'industrie de transformation concernée. Cette nouveauté permet également l'obtention d'une matière organique putrescible hygiénisée. Il est à noter que, d'une part, l'obtention de matières premières secondaires valorisables propres et sèches et, d'autre part, le besoin d'hygiénisation des déchets ménagers était insatisfait avant ce dépôt. Son industrialisation est facilement réalisable, et devrait être rapidement reconnue par les professionnels et les hommes de l'art

## Revendications

1. Procédé de traitement de déchets ménagers du type comportant les phases successives suivantes :
**a)** réception (1), ouvreur de sacs (3) et criblage (4) sous arrosage,
**b)** séchage (7), puis triage (8) et séparation des matières organiques putrescibles d'un côté, et de l'autre, triage et évacuation des matières premières secondaires recyclables (9 et 10).
**c)** pour les matières organiques putrescibles, après les phases **a),** et **b),** il est procédé à un broyage (11) et à un séchage (12) pour l'obtention d'un granulat,
et caractérisé en ce que entre les phases **a), b),** on effectue les étapes supplémentaires de :
**lavage (5) et essorage par centrifugation (6).**

2. Procédé selon la revendication **1**, caractérisé en ce que le lavage est effectué dans un tambour rotatif à axe horizontal ou vertical dans lequel le lavage s'effectue en utilisant de l'eau recyclée en permanence avec recyclage et récupération des graisses.

3. Procédé selon la revendication **1**, caractérisé en ce que le centrifugeage est effectué au moyen d'une décanteuse rotative à fonctionnement continu.

## Claims

1. Successive steps of the processing method for kitchen waste :
a) reception (1), bags opening (3), then screening (4) and drenching,
b) drying (7) ; sorting (8) and separation of the putrescible organic materials, and then sorting, evacuation of the recyclable secondary raw materials (9 & 10).
c) For the putrescible organic materials, after the steps a) and b), it is proceeded to a grinding (11) and a drying (12) in order to obtain a granulate, and characterized by the following steps between the steps a) and b) :
**washing (5) and drying by centrifuging (6)**.

2. Processing method according to the claim 1, characterized by the fact that the washing is made in a rotating drum with horizontal or upright spindle by using permanently recycled water with recycling and reprocessing the greases.

3. Processing method according to the claim 1, characterized by the fact that the centrifuging is made by means of a rotating decanter which is constantly turning.

## Patentansprüche

1. Behandlungsverfahren des Hausmülles des Types, welcher die aufeinanderfolgenden Stufen umfaßt :
a) Annahme (1), Sacköffner (3) und Durchsieben unter Bewässerung,
b) Trocknen (7), dann Sortieren (8) und Vertrennung der organischen fäulnisfähigen Materien, einerseits, Trennung und Entsorgung der rezyklierten Nebengrundstoffe (9 und 10), anderseits.
c) Was die organischen fäulnisfähigen Materien betrifft : nach der Stufen a) und b) zerkleinert (11) man sie und trocknet man sie (12) um ein Granulat zu erhalten,
und es ist damit charakterisiert : zwischen den Stufen a), b), verwirklicht man die zusätzlichen Stufen :
**Waschen (5) und Zentrifugieren (6)**

2. Verfahren nach der Inanspruchnahme 1, welches damit charakterisiert wird: das Waschen wird in einer Drehtrommel mit waagerechter oder senkrechter Achse ausgeführt, indem dauernd rezykliertes Wasser verwendet wird und die Öle wiederverwendet und wiedergewinnt werden.

3. Verfahren nach der Inanspruchnahme 1, welches damit charakterisiert wird: das Zentrifugieren wird mit einer DrehSiebzentrifuge durch Dauerbetrieb durchgeführt.
